# FASCICULE DE BREVET EUROPEEN

(11) **EP 0 614 720 B1**
(45) Date de publication et mention de la délivrance du brevet: **17.07.1996**
(21) Numéro de dépôt: 94460006.3
(22) Date de dépôt: 09.03.1994
(51) Int. Cl.: B23K 11/11

(54) **Tête d'une machine de soudage par points ou d'une machine de sertissage**
Kopf einer Punktschweissmaschine oder einer Krimpmaschine
Head of a spot welding machine or crimping machine

(30) Priorité: 10.03.1993 FR 9302976
(43) Date de publication de la demande: 14.09.1994
(73) Titulaire: Leon, Paul, F-27630 Berthenonville (FR)
(72) Inventeur: Leon, Paul, F-27630 Berthenonville (FR)
(74) Mandataire: Le Guen, Louis François

(56) Documents cités:
- EP-A- 0 122 360
- US-A- 1 354 293
- US-A- 2 014 082

## Description

La présente invention concerne une tête de machine de soudage par points ou de sertissage selon le préambule de la revendication 1.

Une machine de soudage par points comprend deux électrodes prévues pour pouvoir enserrer les pièces à souder et destinées à fournir, auxdites pièces à souder, un courant électrique de forte intensité afin d'élever localement leur température et de former ainsi un point de soudure. Lors de l'opération de soudage, les électrodes sont appliquées sur les pièces à souder avec une force axiale déterminée.

Généralement, une électrode est fixe alors que l'autre est mobile axialement. La seconde est montée dans un dispositif, appelé tête de soudage, qui commande l'électrode mobile pour, d'une part, assurer son déplacement lors de sa mise en place sur une pièce et, d'autre part, pour exercer une force axiale sur les pièces.

Une machine de sertissage comprend également une tête telle qu'il vient d'être décrit avec une électrode mobile qui exerce une force axiale sur la pièce à sertir. Elle comporte une seconde électrode, mais celle-ci ne se trouve pas nécessairement dans l'axe de la première électrode. L'objet de l'invention est également une tête d'une machine de sertissage.

Des machines de soudage ou de sertissage sont généralement pilotées par un calculateur qui, pendant l'opération de soudage ou de sertissage, calcule, en fonction de paramètres mesurés, tels que la température du point de soudage ou de sertissage ou tels que le déplacement relatif des électrodes, de nouvelles valeurs de consigne pour l'intensité de courant de soudage ou de sertissage, pour l'intensité de la force axiale, etc. et qui pilote la machine en fonction de ces nouvelles valeurs.

Le calculateur fonctionne généralement en cycles à deux phases: une phase pendant laquelle il mesure lesdits paramètres de l'opération et une seconde phase pendant laquelle il modifie les valeurs de consigne. Chaque cycle est de durée relativement courte si bien que les temps de réponse, d'une part, de la source de courant et, d'autre part, des moyens qui exercent la force de serrage des pièces à souder doivent être aussi courts que possible afin d'être au moins inférieurs à la durée d'un cycle.

La durée d'un tel cycle est classiquement de l'ordre de 10 ms, mais il pourrait également être inférieur.

Le temps de réponse de la source de courant ne pose pas de réels problèmes.

L'électrode mobile des têtes de soudage ou de sertissage connues est généralement commandée par un ou deux vérins pneumatiques, l'un assurant les déplacements de l'électrode pour son positionnement sur une pièce à souder et l'autre permettant l'application de la force de serrage des pièces à souder.

De tels moyens ne peuvent être satisfaisants pour obtenir des temps de réponse courts tels que ceux qui sont mentionnés ci-dessus.

Le but de l'invention est donc de proposer une tête de soudage ou de sertissage dont le temps de réponse d'application de la force axiale par l'électrode mobile soit inférieur à la durée d'un cycle de fonctionnement de la machine de soudage ou de sertissage.

Pour ce faire, une tête de machine de soudage ou d'une machine de sertissage selon l'invention est caractérisée en ce qu'elle comprend un électroaimant prévu pour transmettre a l'électrode mobile la force axiale qu'elle exerce ainsi sur une pièce à souder ou la pièce à sertir pendant l'opération de soudage ou de sertissage.

Le fait que la force axiale exercée par l'électrode mobile ait une origine électromagnétique permet d'obtenir des temps de réponse à l'effort qui sont très faibles. Ces temps de réponse faibles sont le résultat, d'une part, du temps d'établissement des forces magnétiques dans l'électroaimant, temps qui dépend des caractéristiques électriques et physiques de sa bobine d'excitation, et d'autre part, de l'inertie des pièces mobiles portant l'électrode mobile.

En optimisant ces différents paramètres, on a pu, par exemple, obtenir des temps de réponse de l'ordre de 1 ms.

On améliore encore ce temps de réponse en prévoyant que la bobine d'excitation dudit électroaimant est alimentée par une source de courant qui délivre un courant dont l'intensité est asservie à une valeur de consigne.

Par cette caractéristique, il est possible d'obtenir des temps de réponse aussi courts que voulus, la limite étant imposée par les caractéristiques électriques de la source de courant qui alimente la bobine d'excitation de l'électroaimant.

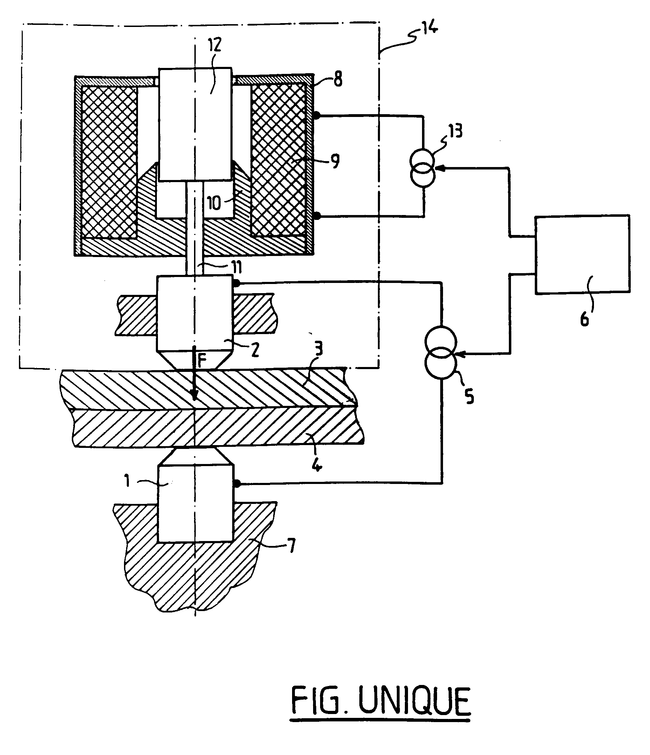

Les caractéristiques de l'invention mentionnées ci-dessus, ainsi que d'autres, apparaîtront plus clairement à la lecture de la description suivante d'un exemple de réalisation, ladite description étant faite en relation avec le dessin joint représentant schématiquement une machine à souder équipée d'une tête selon l'invention.

La machine représentée comporte deux électrodes coaxiales 1 et 2 prévues pour enserrer deux pièces à souder 3 et 4. Elles sont reliées électriquement à une source de courant 5 pour délivrer le courant de soudage aux pièces 3 et 4. La source de courant 5 est pilotée par une unité de commande 6.

L'électrode 1 est montée fixe sur le châssis 7 de la machine à souder alors que l'autre électrode 2 est prévue pour être mobile par rapport au châssis 7.

Le montage de l'électrode mobile 2 est prévu de manière qu'elle puisse se déplacer axialement lors de la mise en place des pièces à souder 3 et 4, ceci en prenant deux positions extrêmes: une position où elle se trouve en retrait et une autre position où elle est en contact avec la pièce à souder 3.

Les moyens qui assurent cette fonction ne faisant pas l'objet de l'invention ne sont pas représentés sur la Fig. unique.

Par ailleurs, ce montage de l'électrode mobile 2 est prévu pour qu'elle puisse, en position où elle est en contact avec la pièce à souder 3, exercer une force axiale F.

Les moyens qui assurent cette fonction sont constitués d'un électroaimant 8 pourvu d'une bobine d'excitation 9, d'un fer 10 et d'une tige 11 avec un noyau 12 qui peut coulisser par rapport au fer 10. Lorsque la bobine d'excitation 9 est alimentée, le noyau 12 et la tige 11 sont soumis à une force électromagnétique axiale.

La tige 11 est coaxiale à l'électrode 2 et est en contact avec celle-ci. Ainsi, elle transmet la force électromagnétique engendrée par l'électroaimant 9 à l'électrode 2.

La bobine d'excitation 9 est reliée électriquement à une source de courant 13 destinée à être pilotée par l'unité de commande 6. La source de courant 13 est prévue pour délivrer, à la bobine d'excitation 9, un courant dont l'intensité est asservie à une valeur de consigne, laquelle valeur lui est fournie par l'unité de commande 6.

L'électroaimant 8 et l'électrode 2 constituent les éléments principaux d'une tête de soudage qu'on a représentée par un trait mixte fin 14.

Outre son temps de réponse rapide, la tête de l'invention présente également l'avantage que la force F qui est appliquée sur la pièce 3 est indépendante du déplacement de l'électrode mobile 2 par rapport à cette pièce, notamment pendant l'opération de soudage.

L'invention s'applique également à des machines de sertissage, notamment des machines du type de celle qui est décrite dans la demande de brevet français FR-A-2680918 qui a été déposée au nom du présent demandeur.

## Revendications

1. Tête d'une machine de soudage par points ou d'une machine de sertissage comprenant une électrode (2) destinée, d'une part, à fournir le courant de soudage ou de sertissage à une pièce (3) à souder à une autre (4) ou à sertir et, d'autre part, à exercer, pendant l'opération de soudage ou de sertissage, une force axiale (F) sur ladite pièce (3), caractérisée en ce qu'elle comprend un électroaimant (8) prévu pour transmettre à ladite électrode (2) ladite force axiale (F) et une unité de commande (6) pour piloter en fonction de paramètres mesurés le courant d'excitation dudit électroaimant .

2. Tête selon la revendication 1, caractérisée en ce que la bobine d'excitation (9) dudit électroaimant (8) est alimentée par une source de courant (13) qui délivre un courant dont l'intensité est asservie à une valeur de consigne, ladite source de courant (13) étant pilotée par ladite unité de commande (6) .

## Claims

1. Head of a spot-welding or crimping machine, comprising an electrode (2) for the purpose of supplying the welding or crimping current to a part (3) to be welded or crimped to another part (4) and exerting, during the welding or crimping operation, an axial force (F) on the said part (3), characterized in that it comprises an electromagnet (8) for transmitting the said axial force (F) to the said electrode (2) and a control unit (6) for controlling the exciting current of the said electromagnet as a function of measured parameters.

2. Head according to Claim 1, characterized in that the exciter coil (9) of the said electromagnet (8) is energized by a current source (13) which delivers a current having an intensity which is dependent on a reference value, the said current source (13) being controlled by the said control unit (6).

## Patentansprüche

1. Kopf einer Punktschweißmaschine oder einer Krimpmaschine mit einer Elektrode (2) einerseits zur Lieferung des Schweiß- oder Krimpstroms an ein Teil (3), das mit einem anderen (4) verschweißt oder gekrimmt werden soll, und andererseits zur Ausübung einer axialen Kraft (F) auf das Teil (3) während des Schweiß- oder Krimpvorgangs, **dadurch gekennzeichnet**, daß die Maschine einen Elektromagneten (8) zum Übertragen der axialen Kraft (F) auf die Elektrode (2) und eine Steuereinheit (6) zum Steuern des Erregerstroms des Elektromagneten in Abhängigkeit von gemessenen Parametern enthält.

2. Kopf nach Anspruch 1, **dadurch gekennzeichnet**, daß die Erregerwicklung (9) des Elektromagneten (8) von einer Stromquelle (13) gesteuert ist, die einen Strom liefert, dessen Stärke auf einen Einstellwert eingestellt wird, wobei die Stromquelle (13) durch die Steuereinheit (6) gesteuert ist.
